Europäisches Patentamt

European Patent Office

Office européen des brevets

(11) Veröffentlichungsnummer: **0 075 910**
**A1**

(12) # EUROPÄISCHE PATENTANMELDUNG

(21) Anmeldenummer: 82108904.2

(22) Anmeldetag: 27.09.82

(51) Int. Cl.³: **B 60 B 33/00**

(30) Priorität: 28.09.81 US 306036

(43) Veröffentlichungstag der Anmeldung:
06.04.83 Patentblatt 83/14

(84) Benannte Vertragsstaaten:
DE FR GB IT NL

(71) Anmelder: DEERE & COMPANY
1 John Deere Road
Moline Illinois 61265(US)

(72) Erfinder: O'Neill, Michael Jerome
330 Nelson Road
Mayville Wisconsin 53050(US)

(72) Erfinder: Campbell, Janet Schaeffer
186 Morningside Dr. 1
Fond du Lac Wisconsin 54935(US)

(74) Vertreter: Fricke, Joachim, Dr. et al,
Dr. R. Döring, Dr. J. Fricke, Patentanwälte
Josephspitalstrasse 7
D-8000 München 2(DE)

(54) Laufradanordnung, insb. für kleine Fahrzeuge.

(57) Es ist eine Laufradanordnung, insb. für kleine Fahrzeuge wie Park- oder Gartenschlepper vorgesehen, bei der ein Laufrad mit seiner Felge in einer Radgabel drehbar gelagert ist, die mittels eines senkrechten Montagezapfens in einer Ausnehmung des Fahrgestells gelagert ist. Der Zapfen ist in einer Hülse mit Hilfe von Montageringen axial festgelegt, wobei die Hülse auf ihrer Außenseite einen elastomeren Körper fest mit der Umfangsfläche verbunden aufweist, welcher mit seiner Außenseite wiederum fest mit der Innenfläche eines konzentrischen Gehäuseteils verbunden ist, der seinerseits in eine Ausnehmung des Fahrgestells eingesetzt und axial gesichert ist. Es kann der Gehäuseteil in der Ausnehmung des Fahrzeugrahmens oder aber der Montagezapfen in der Hülse drehbar sein.

FIG. 1

0075910

- 1 -

## Laufradanordnung, insb. für kleine Fahrzeuge

Die Erfindung betrifft eine Laufradanordnung, insb. für kleine Fahrzeuge, wie Park- oder Gartenschlepper oder Traktoren, mit einem Radhalter, der mittels eines Zapfens in einer Ausnehmung des Fahrgestells drehbar gelagert ist.

Wegen der Kosten ist es bei vielen kleinen Fahrzeugen, die nicht für den Straßenverkehr bestimmt sind, wie Parkschlepper oder Gartentraktoren üblich, bei der Montage der Laufräder keine Stoßisolierung oder Stoßabsorbtionsanordnungen vorzusehen. Derartige Fahrzeuge können so ausgebildet sein, daß wenigstens die Antriebsräder stoßgesichert sind, jedoch nicht die übrigen Laufräder. Aufgrund der auftretenden Vibrationen, die bei mangelnder Stoßisolation auf alle Teile der Maschine durchgreifen können, können erhebliche nachteilige Folgen eintreten. Eine Folge übermäßiger Vibration oder Schwingungen ist das sich Lösen von Komponenten der Montageeinrichtungen.

Es ist Aufgabe der Erfindung eine Laufradanordnung der eingangs näher bezeichneten Art so weiterzubilden, daß diese außerordentlich einfach und damit preiswert ist und dennoch eine gute Stoß- und Vibrationsisolierung und Dämpfung gewährleistet.

Diese Aufgabe wird erfindungsgemäß dadurch gelöst, daß der Zapfen des Radhalters fest oder drehbar in einer Hülse montiert ist, die im radialen Abstand von einem Gehäuseteil umgeben ist, und daß ein elastomerer Körper fest an der Außenseite der Hülse und fest an der Innenseite des Gehäuseteils befestigt ist.

Das Laufrad kann in einer Laufradgabel mit Hilfe der Felge montiert sein. Die Gabel weist den sich allgemein senkrecht erstreckenden Zapfen auf. Dieser Zapfen greift in die rohrförmige Hülse ein, auf deren Außenseite das elastomere Material fest angeordnet ist. Die äußere Umfangsfläche des elastomeren Körpers ist wiederum fest an der Innenfläche des umgebenden Gehäuseteils angebracht. Der Gehäuseteil wiederum kann an einem Tragteil des Fahrzeuges festgelegt werden. Damit wird eine begrenzte Bewegung zwischen der Radgabel und dem Gehäuse ermöglicht, wobei ein erheblicher Teil der Stoßbelastung durch das elastomere Material absorbiert und damit stoßgedämpft wird.

Die Erfindung wird nachfolgend anhand schematischer Zeichnungen an einem Ausführungsbeispiel näher erläutert.

Es zeigen:

Figur 1 in einer auseinandergezogenen Darstellung, teilweise im senkrechten Schnitt die einzelnen Teile der Laufradanordnung nach der Erfindung und

Figur 2 in Seitenansicht das Laufrad, wobei die zugehörige Laufradanordnung in der montierten Stellung senkrecht geschnitten wiedergegeben ist.

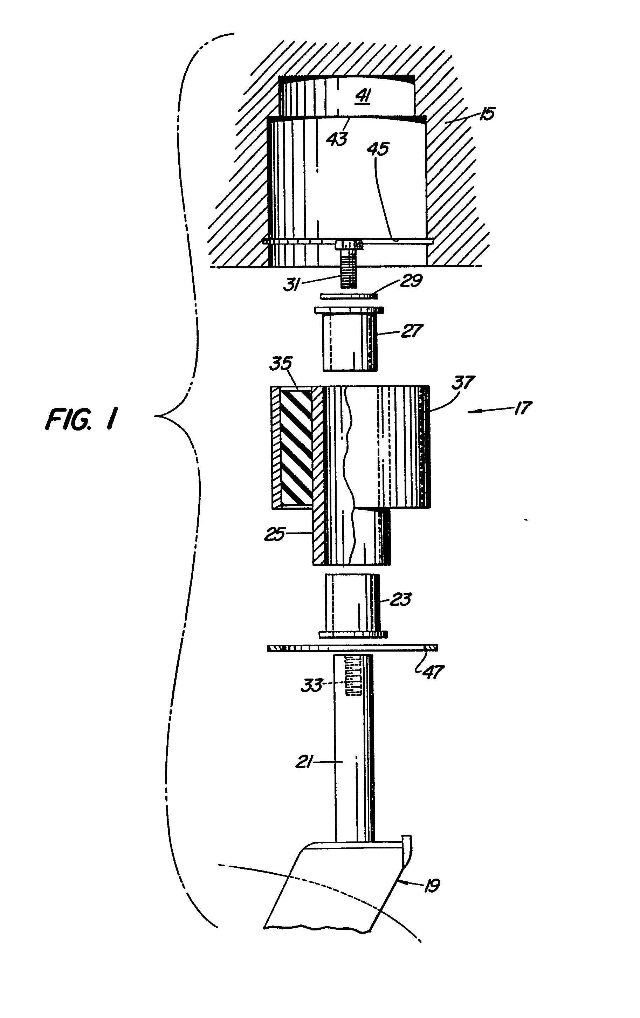

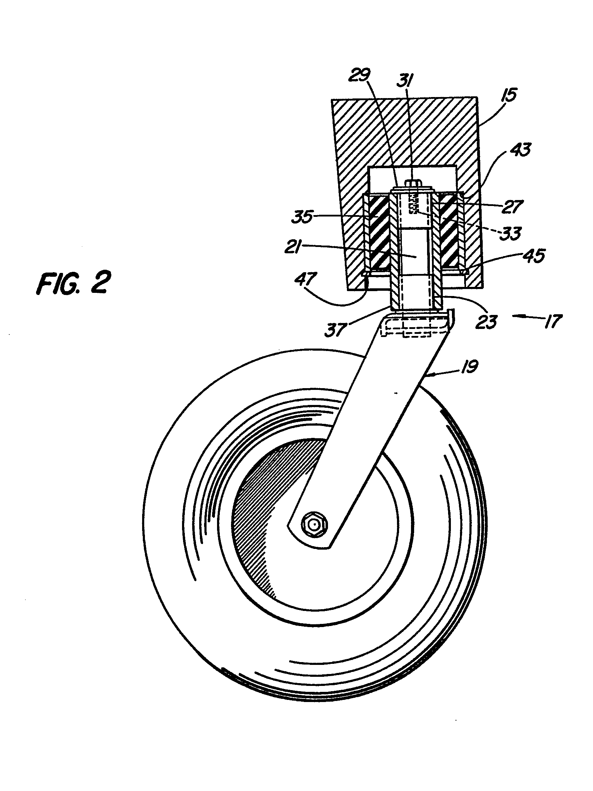

Die Figuren 1 und 2 zeigen die Laufradanordnung 17. Diese umfaßt ein auf einer Felge montiertes Laufrad. Das Laufrad selbst ist mit Hilfe der Felge in einer Gabel 19 drehbar gelagert. Diese weist an ihrem oberen Ende einen sich nach oben erstreckenden Montagezapfen 21 auf. Weiterhin ist ein erster, mit einem Kragen versehener langgestreckter Montagering 23 vorgesehen. Dieser wird über den Montagezapfen 21 geschoben. Darauf wird eine rohrförmige Hülse 25 aufgefädelt, die gegenüber dem Zapfen im radialen Abstand durch den Montagering 23 gehalten wird. Ein zweiter langgestreckter Montagering 21 wird von oben in die rohrförmige Hülse 25 eingeschoben. Dadurch wird der obere Abschnitt der Hülse 25 im radialen Abstand gegenüber dem Montagezapfen 21 gesichert. Auch der Montagering 27 ist langgestreckt und weist einen Flansch auf. Die beiden Montageringe 23 und 27 können identisch ausgebildet sein. Eine Unterlegscheibe 29 sowie eine Schraube 31 dienen zur axialen Sicherung des Montagezapfens 21 in der rohrförmigen Hülse 25. Zu diesem Zweck wird die Schraube 31 durch die Unterlegscheibe 29 gefädelt und greift mit ihrem Gewinde in eine entsprechende Gewindebohrung 33 an dem oberen Stirnende des Montagezapfens ein.

Die rohrförmige Hülse 25 weist auf einem Abschnitt ihres äußeren Umfanges einen fest darauf angeordneten elastomeren Körper 35 auf. Dieser wiederum ist fest über seine äußere Umfangsfläche mit der Innenfläche eines Gehäuseteils 37 verbunden.

Der rückwärtige Bereich des Fahrzeugrahmens 15 weist eine Vertiefung 41 auf, die einen erweiterten Abschnitt 43 besitzt. Die soweit beschriebene Laufradanordnung kann mit dem Gehäuseteil 37 in die Ausnehmung 41 bis zur Anlage an den Schulterbereich 43 eingeschoben werden. In der Umfangswand der Vertiefung ist eine Nut 45 eingearbeitet, in die ein Sprengring oder Stützring 47 eingreifen kann, der die Montageanordnung in der Vertiefung sichert. Es ist ersichtlich, daß jeder Stoß oder auch Vibrationen zwischen der Radanordnung und dem Fahrzeuggestell 15 während der Betriebsweise des Fahrzeuges innerhalb des elastomeren Körpers 35 zu einem erheblichen Ausmaß absorbiert werden.

0075910

Mit Hilfe der beschriebenen Anordnung ist es möglich den Montagezapfen 21 mit Hilfe der Montageringe 23, 27 in der Hülse 25 drehbar oder auch fest anzuordnen. In jedem Fall ist der Montagezapfen 21 mit Hilfe der beschriebenen Anordnung in der Hülse 25 in axialer Richtung festgelegt.

Patentansprüche

1. Laufradanordnung, insb. für kleine Fahrzeuge, wie Park- oder Gartentraktoren mit einem Radhalter, der mittels eines Zapfens in einer Ausnehmung des Fahrgestells drehbar gelagert ist, dadurch g e k e n n - z e i c h n e t, daß der Zapfen (21) fest oder drehbar in einer Hülse (25) montiert ist, die im radialen Abstand von einem Gehäuseteil (37) umgeben ist, und daß ein elastomerer Körper (35) fest an der Außenseite der Hülse (25) und fest an der Innenseite des Gehäuseteils (37) befestigt ist.

2. Laufradanordnung nach Anspruch 1, dadurch g e - k e n n z e i c h n e t, daß zur Anordnung des Zapfens (21) in der Hülse (25) zwei jeweils mit einem Kragen versehene langgestreckte Montageringe (23,27) vorgesehen sind, die jeweils bis zur Anlage des Kragens an einer Stirnseite der Hülse (25) in ein Hülsenende geschoben sind, daß der Zapfen (21) durch beide Montageringe (23,27) ragt und daß der Zapfen an seinem freien Ende mittels Unterlegscheibe (29) und Schraube (31) in axialer Richtung in der Hülse (25) festgelegt ist.

FIG. 1

FIG. 2

Europäisches
Patentamt

**EUROPÄISCHER RECHERCHENBERICHT**

| | **EINSCHLÄGIGE DOKUMENTE** | | **KLASSIFIKATION DER ANMELDUNG (Int Cl.³)** |
|---|---|---|---|
| Kategorie | Kennzeichnung des Dokuments mit Angabe, soweit erforderlich, der maßgeblichen Teile | betrifft Anspruch | |
| X,Y | DE - C - 715 087 (BASSICK CO.) <br> * Fig. 4 * | 1,2 | B 60 B 33/00 |
| X,Y | DE - A - S 28152 X/34i (SIEMENS- SCHUCKERTWERKE) <br> * Seite 2, Zeilen 35 bis 39; Fig. 1 * | 1,2 | |
| X,Y | CH - A - 487 746 (AB LYCKEÅBORGS BRUK) <br> * Fig. 1 * | 1,2 | **RECHERCHIERTE SACHGEBIETE (Int. Cl.³)** |
| X,Y | US - A - 2 227 271 (NOELTING) <br> * Fig. 1 * | 1,2 | |
| Y | DE - C - 846 039 (TENTE-ROLLEN-SCHULTE) <br> * Fig. 1 * | 2 | B 60 B 33/00 |
| Y | DE - U - 1 800 876 (TENTE-ROLLEN) <br> * Fig. 1 * | 2 | |
| Y | DE - U - 1 898 067 (A. MEYER STANZEREI U. SPRITZGUSSBETRIEB) <br> * Fig. 2 * | 2 | **KATEGORIE DER GENANNTEN DOKUMENTE** |
| Y | DE - U - 1 949 888 (HUFA-ROLLEN) <br> * Fig. 2 * | 2 | X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D: in der Anmeldung angeführtes Dokument <br> L: aus andern Gründen angeführtes Dokument |
| Y | GB - A - 1 002 833 (HOMA ENGINEERING) <br> * Fig. 2 * | 2 | |

| | Der vorliegende Recherchenbericht wurde für alle Patentansprüche erstellt. | &: Mitglied der gleichen Patentfamilie, übereinstimmendes Dokument |
|---|---|---|

| Recherchenort | Abschlußdatum der Recherche | Prüfer |
|---|---|---|
| Berlin | 04-11-1982 | ZAPP |

EPA form 1503.1   06.78